# EUROPÄISCHE PATENTSCHRIFT

(11) **EP 2 382 258 B1**
(45) Veröffentlichungstag und Bekanntmachung des Hinweises auf die Patenterteilung: **18.12.2013**
(21) Anmeldenummer: 10701319.5
(22) Anmeldetag: 20.01.2010
(51) Int. Cl.: C08G 69/04, C08K 5/5313, C08K 5/3435, C07F 9/6571

(54) **LICHT- UND WÄRMESTABILISIERTE POLYAMIDE UND VERFAHREN ZU IHRER HERSTELLUNG**
LIGHT AND HEAT STABILIZED POLYAMIDES AND METHODS FOR THE PRODUCTION THEREOF
POLYAMIDES PHOTO- ET THERMOSTABILISÉS ET PROCÉDÉ DE FABRICATION ASSOCIÉ

(30) Priorität: 23.01.2009 DE 102009005967
(43) Veröffentlichungstag der Anmeldung: 02.11.2011
(73) Patentinhaber: Domo Capro Leuna GmbH, 06234 Leuna (DE)
(72) Erfinder: MAIWALD, Steffen, 04687 Trebsen (DE); VEEVAETE, Maarten, Dr., 04277 Leipzig (DE)
(74) Vertreter: Nenning, Peter
(86) Internationale Anmeldenummer: PCT/EP2010/000300
(87) Internationale Veröffentlichungsnummer: WO 2010/083989

(56) Entgegenhaltungen:
- EP-A1- 1 693 403
- EP-B1- 0 759 953
- WO-A1-2004/113355
- WO-A1-2009/109347
- DE-A1- 2 646 218
- US-A- 4 742 088
- DATABASE WPI Week 197335 Thomson Scientific, London, GB; AN 1973-49475U XP002579995 & JP 48 000893 A (TEIJIN LTD) 8. Januar 1973 (1973-01-08)

## Beschreibung

Die Erfindung betrifft Polyamide mit verbesserter Licht- und Wärmestabilisierung. Weiterhin betrifft die Erfindung ein Verfahren zur Herstellung dieser Polyamide sowie ihre Verwendung.

Es ist bekannt, dass Polyamide für manche Anwendungen gegen thermooxidative Schädigung sowie gegen Schädigung durch Einflüsse von Strahlung, insbesondere UV - Licht, durch Zusatz entsprechender Stabilisatoren geschützt werden müssen. Schädigungen der Polyamide treten insbesondere dann auf, wenn die Verarbeitung der Materialien bei sehr hohen Temperaturen und verhältnismäßig langen Verweilzeiten wie beispielsweise in einem Spinnextruder stattfindet oder wenn die hergestellten Produkte bei ihrer bestimmungsgemäßen Verwendung besonderen Umweltbedingungen wie zum Beispiel Luftsauerstoff und starkem Sonnenlicht ausgesetzt sind. Besonders betroffen sind Produkte mit extrem großer spezifischer Oberfläche wie Textil- und Teppichfasern, aber auch sehr dünnwandige Spitzgussteile und Folien, die ebenfalls aus Polyamiden gefertigt werden können.

Wirksame Stabilisatoren zur Verminderung der oxidativen/thermischen Schädigung sowie zur Verbesserung der Beständigkeit gegen schädigende Einflüsse durch Licht sind seit langem bekannt. Dabei handelt es sich hauptsächlich um Verbindungen mit einer sterisch gehinderten phenolischen Struktur oder um sterisch gehinderte Amine, sogenannte HALS, welche je nach Anwendungszweck in unterschiedlicher Ausführungsform verfügbar sind und kommerziell angeboten werden.

Die Stabilisierung der Polyamide mit derartigen Stabilisatoren kann auf verschiedene Weise erfolgen. Einerseits können die Stoffe durch Extrusion dem Polymer beigemischt werden, wobei sie überwiegend gelöst im Polymer vorliegen und nicht an der Polymerkette angebunden sind. Sie können daher sowohl während der Verarbeitung als auch während des Gebrauchs mehr oder weniger leicht durch Verdunsten, Auswandern oder Auswaschen aus der Polymerstruktur migrieren, was zu einer ungewollten Verminderung der Wirksamkeit durch Verarmung führt. Außerdem schränkt die Migration von chemischen Substanzen aus dem Polymer, welche beispielsweise in Teppichfasern zu Raumklimabelastungen oder im textilen Bereich zu Hautreizungen bzw. Sensibilisierungen führen könnte, die Anwendungsbreite dieser Materialien stark ein.

In einer anderen Ausführungsform kann die Wärme- und Lichtstabilisierung von Polyamiden auch in der Weise durchgeführt werden, indem die stabilisierenden Substanzen bereits den Monomeren zugegeben werden. Besonders bevorzugt ist die Zugabe in einer frühen Phase der Polymerisation. In Abhängigkeit von der Art der reaktiven Endgruppen sowie von der thermischen und der Hydrolysestabilität der verwendeten Verbindungen können diese direkt chemisch an die Polymerkette gebunden werden und damit nicht wie die nur gelösten Substanzen aus dem Polymer migrieren. Nachteilig bei dieser Verfahrensweise ist jedoch, dass die bei der Herstellung von Polyamiden herrschenden sehr drastischen Reaktionsbedingungen wie Temperaturen über 250 °C, üblicherweise in Gegenwart von Wasser, und die verhältnismäßig langen Verweilzeiten die Palette der zu verwendenden Substanzen auf Grund ihrer chemischen Beständigkeit erheblich einschränken.

Als offensichtlich für diese Verfahrensweise besonders geeignet haben sich 4-Aminopiperidin - Derivate erwiesen, welche in diversen Ausführungsformen bereits während der Polyamid - Kettenbildungsreaktion im Reaktor dem Reaktionsgemisch zugegeben werden und so zu licht- und wärmestabilisierten Polyamiden führen.

So wird in DE 197 45 099 A1 ein Verfahren beschrieben, welches als Licht- und Wärmestabilisator das Bis-(2,2,6,6-Tetramethylpiperidyl)-4-isophthalsäurediamid verwendet. Die Verbindung wird von Clariant kommerziell unter dem Handelsnamen Nylostab S-EED angeboten. Die gute Hydrolysestabilität der beiden vorhandenen Amidgruppen führt jedoch zu dem entscheidenden Nachteil, dass die Verbindung nur teilweise und unter drastischen Bedingungen wie lange Verweilzeiten bei erhöhten Drücken in Gegenwart von viel Wasser hydrolysiert und damit nur zum Teil mit der Polymerkette reagieren kann. Der Einsatz zur Polyamidherstellung kann daher sinnvollerweise auch nur im Autoklaven oder in einem Zweistufenverfahren erfolgen. Nicht umgesetztes Nylostab S-EED kann bereits bei der Entmonomerisierung durch Extraktion mit heißem Wasser ausgewaschen werden, was zu einer Belastung des Extraktwassers und zur Verminderung der Wirksamkeit des Stabilisators führt.

In EP 07 599 53 wird ein Verfahren zur Herstellung verbesserter licht- und wärmestabilisierter Polyamide beschrieben, bei welchem dem Polymerisationsgemisch Triacetondiamin - Verbindungen der allgemeinen Formel (I) zugesetzt werden.

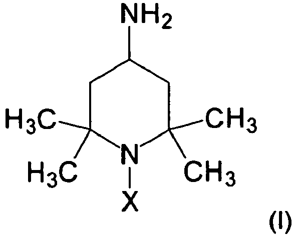

Das Triacetondiamin wird bevorzugt gemeinsam mit Dicarbonsäuren eingesetzt. Die primäre Amingruppe reagiert dabei mit freien Carboxylgruppen der Polymerkette vollständig unter Amidbildung. Die sekundäre Amin - Gruppierung ist unter den gegebenen Umständen nicht in der Lage, mit Carboxylgruppen unter Amidbildung zu reagieren, so dass das Triacatondiamin neben der Funktion als Licht- und Wärmestabilisator zusätzlich als Kettenregler bei der Polyamidherstellung wirkt.

Die licht- und wärmestabilisierende Wirkung der Triacetondiamin - Derivate ist jedoch begrenzt und kann auf Grund ihrer Kettenlängen regulierenden Wirkung nur in einem verhältnismäßig kleinem Konzentrationsfenster wirkungsvoll zum Einsatz kommen, da bei sehr hohen Konzentrationen die technisch relevanten Molekulargewichte für die resultierenden Polyamide nicht mehr erreicht werden können. Zur Verbesserung der Licht- und Wärmestabilisierung müssen daher weitere, gegebenenfalls synergistisch wirkende Verbindungen zugesetzt werden.

So wird in EP 1 053 272 B1 die zusätzliche Verwendung eines weiteren Triacetondiamin - Derivates der allgemeinen Formel (II) beschrieben.

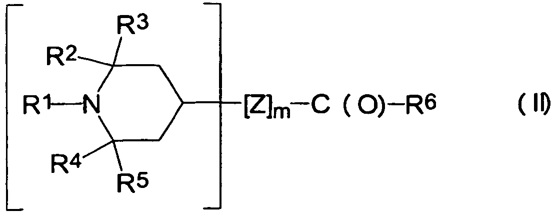

Durch Konzentrationserhöhung der Triacetondiamin - Gruppierung am Ende der Polymerkette konnte eine Erhöhung der Stabilisatorwirksamkeit nachgewiesen werden. Da auch dieser Verbindungstyp Kettenlängen stabilisierende Wirkung besitzt, kann damit aber das Problem der beschränkten Einsatzfähigkeit nicht gelöst werden.

Aufgabe der Erfindung ist es deshalb, Stabilisatoren aufzufinden, die in einem technisch gut handhabbaren Verfahren zu Polyamiden führen, die eine deutlich verbesserte Licht- und Wärmestabilität aufweisen. Das zur Herstellung solcher Polyamide ablaufende Verfahren soll die Nachteile bisheriger Verfahrensweisen überwinden und zu Polyamiden mit den gewünschten Eigenschaften führen.

Überraschenderweise wurde gefunden, dass der Zusatz geringer Mengen einer Substanz der allgemeinen Formel (III) die Licht- und Wärmestabilität der erhaltenen Polyamide wesentlich verbessern kann. 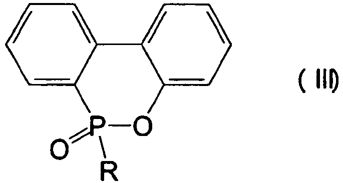
in der R die folgende Bedeutung hat:
   R =
      - -COOH, -COOR¹, -NHR¹, -NCO, Anhydrid,
      - C₃ bis C₉ cycloaliphatisch, stellungsbeliebig substituiert mit R² und/oder R³,
      - Benzyl, Phenyl, Naphthenyl, stellungsbeliebig substituiert mit R² und/oder R³,
      - aliphatisch, R²- [CH₂]ₙ - CH - [CH₂]ₘ- R³, mit n und m von 0 bis 20, wobei R² und R³ an jedem beliebigen Kohlenstoffatom des aliphatischen Kohlenwasserstoffs gebunden sein kann und nicht auf terminale Stellung beschränkt ist,
      R¹ = C₁ bis C₂₀ aliphatisch, C₄ bis C₉ cycloaliphatisch, Benzyl, Phenyl,
      R² = -COOH, -COOR¹, -NHR¹, -NCO, Anhydrid,
      R³ = R²,
      ausgenommen Butandicarbonsäurereste

Gegenstand der Erfindung sind die in den Ansprüchen beschriebenen Verfahren zur Herstellung von licht- und wärmestabilisierten Polyamiden, Verwendungen von Verbindungen der allgemeinen Formel III, licht- und wärmestabilisierte Polyamide, und Verwendungen von licht- und wärmestabilisierten Polyamiden.

In einer bevorzugten Ausführungsform stellt R einen aliphatischen oder cycloaliphatischen Kohlenwasserstoffrest mit 3 - 20 C - Atomen bzw. einen Benzyl- oder Phenylrest dar, welcher ein oder mehrere, bevorzugt jedoch zwei Amid bildende funktionelle Gruppen, wie zuvor beschrieben, chemisch gebunden enthält. Nachfolgend aufgeführte Strukturbeispiele für R sind dabei besonders bevorzugt, begrenzen die Vielzahl weiterer Möglichkeiten jedoch nicht:

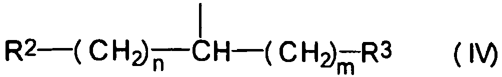

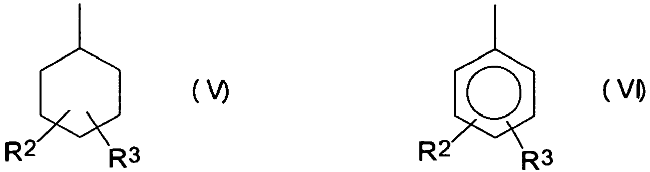

In Formel (IV) können n und m unabhängig voneinander Werte zwischen 0 und 20, bevorzugt zwischen 1 und 9 annehmen, wobei die Summe der Kohlenstoffatome in der unverzweigten Kette zwischen 2 und 15 sein sollte. Die in Formel (IV) dargestellte Anordnung der funktionellen Amid bildenden Gruppen R² und R³ begrenzt ihre Anordnungsmöglichkeiten nicht auf die terminale Stellung sondern verdeutlicht sie nur beispielhaft. Selbstverständlich können die Amid bildenden funktionellen Gruppen R² und R³, sofern es chemisch möglich ist, auch an jedem anderen C - Atom der Kohlenstoffkette gebunden sein.

Die in den beispielhaften Formeln (IV) bis (VI) dargestellten Amid bildende funktionellen Gruppen R² und R³ können gleich oder unterschiedlich sein. Erfindungsgemäß einzusetzende Amid bildende funktionelle Gruppen R² und R³ sind Carboxylreste -COOH, Estergruppen -COOR¹, wobei R¹ ein aliphatischer Kohlenwasserstoffrest mit 1 - 20 C - Atomen bzw. ein cycloaliphatischer Kohlenwasserstoffrest mit 4 - 10 C - Atomen ist, Benzyl- oder Phenylreste. Außerdem können R² und R³ Aminreste -NHR¹, Anhydrid- oder Isocyanatreste -NCO sein.

Die erfindungsgemäß zugefügte Verbindung (III) wird den Ausgangsmonomeren oder der polymerisierenden Reaktionsmischung zugesetzt. Sie wird in Abhängigkeit von der Zahl der chemisch gebundenen, funktionellen Amid bildenden Gruppen entweder endständig oder statistisch verteilt innerhalb der Polymerkette chemisch gebunden. Somit wirkt sie ebenso wie die üblichen, bei der Polyamidherstellung das Molekulargewicht regulierenden Zusätze wie Mono- und Polycarbonsäuren bzw. entsprechende Amine als Kettenregler.

Erfindungsgemäß können auch Kombinationen von zwei oder mehreren Verbindungen der allgemeinen Struktur (III) mit gleichen oder unterschiedlichen Amid bildenden funktionellen Gruppen den Ausgangsmonomeren oder dem polymerisierenden Reaktionsgemisch zugesetzt werden. Die geschickte Wahl einer Kombination, beispiels-weise aus einer Verbindung der Struktur (III) mit zwei Carboxylgruppen als Amid bildende funktionelle Gruppen und einer Verbindung der Struktur (III) mit zwei Amingruppen als Amid bildende funktionelle Gruppen, bietet dem Fachmann zusätzlich die Möglichkeit zur einfachen Stabilisierung der gewünschten mittleren Molekulargewichte des Polyamids, vollkommen unabhängig von der zur Stabilisierung erforderlichen Konzentration. Das erfindungsgemäße Verfahren bietet daher den Vorteil, dass die zur Stabilisierung erforderliche Menge an einer oder mehrerer Verbindungen des Strukturtyps (III) den Ausgangssubstanzen oder dem polymerisierenden Reaktionsgemisch in praktisch unbegrenzter Menge zugesetzt werden kann, ohne wegen der Kettenlängen regulierenden Wirkung auf eine bestimmte Höchstmengen beschränkt zu sein.

Durch die chemische Bindung von Verbindungen des Strukturtyps (III) an bzw. in die Polymerkette werden inhärent stabilisierte Polyamide erhalten. Im beanspruchten Verfahren werden eine oder mehrere Verbindungen der allgemeinen Formel (III) gemeinsam mit einem oder mehreren Triacetondiamin - Derivaten der allgemeinen Formel (I) verwendet 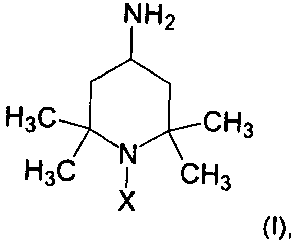 wobei X für H, C₁ bis C₂₀ aliphatisch, Benzyl steht.

Die erfindungsgemäße Verwendung einer Kombination aus beiden Verbindungstypen (I) und (III) zur Stabilisierung führt im Vergleich mit der alleinigen Verwendung eines oder mehrerer Triacetondiamin - Derivate (I) als Licht- und Wärmestabilisator zu einer deutlichen Verbesserung der Licht- und Wärmestabilität der erhaltenen Polyamide, was in Vergleichbeispielen eindrucksvoll dargelegt werden kann. Die verwendete Stabilisatormenge kann vom Fachmann durch geschickte Auswahl der funktionellen Amid bildenden Gruppen der Verbindung der allgemeinen Formel (III) bzw. durch zusätzliche Verwendung entsprechender Comonomere beliebig gewählt werden, ohne durch die kettenregulierende Wirkung der Verbindungen auf bestimmte Mengen beschränkt zu sein. Der Grad der Stabilisierung kann damit direkt an die oft territorialen und verwendungsbedingten Erfordernisse in Bezug auf schädigende Einflüsse wie Wärme und energiereiche Strahlung angepasst werden. Zusätzlich bietet das erfindungsgemäße Verfahren den Vorteil, dass alle verwendeten Stabilisatorkomponenten am Ende einer Polymerkette oder statistisch verteilt innerhalb der Polyamidkette chemisch gebunden sind, damit die Probleme der Qualitätsminderung durch Migration von Stabilisatorbestandteilen aus dem Polymer verhindert und die Polyamide besser gegen schädigende Einflüsse wie Hitze, Sauerstoff und Licht geschützt werden.

Die Polymerisation bzw. Polykondensation der Ausgangsmonomere in Gegenwart von Verbindungen des Strukturtyps (III), beispielsweise in Gegenwart von Butandicarbonsäure(6-oxo-6H-dibenzo(1,2)oxa-phosphorin-6-yl) (VII), genannt DDP, wird vorzugsweise nach den zur Polyamidherstellung üblichen Verfahren durchgeführt.

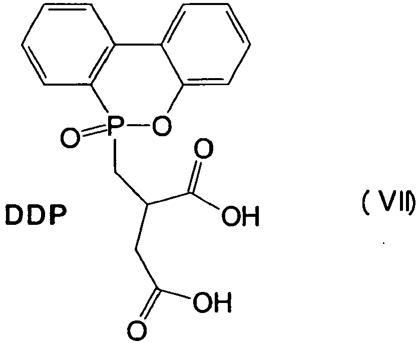

Die Polymerisation von Caprolactam zu Polyamid 6 in Gegenwart von beispielsweise DDP oder anderer Verbindungen des Strukturtyps (III) kann nach den in DE 14 95 198 und DE 25 58 480 beschriebenen kontinuierlichen Verfahren oder diskontinuierlich in einem Autoklaven erfolgen. Die Polymerisation von Gemischen Polyamid bildender Monomere bzw. daraus vorformierter Salze in Gegenwart von DDP oder anderer Verbindungen des Strukturtyps (III), beispielsweise AH - Salz in Gegenwart von DDP, kann entweder diskontinuierlich wie in "Polymerization Processes S. 424 - 467, Interscience, New York 1977" beschrieben oder nach einem kontinuierlichen Verfahren entsprechend EP 129 196 erfolgen. Grundsätzlich können die Ausgangsmonomere und die Verbindungen des Strukturtyps (III) getrennt oder als Gemisch dem Reaktor zugeführt werden. Vorzugsweise führt man die Verbindungen des Strukturtyps (III) gelöst als Mischung mit einem Teil der Ausgangsmonomeren dem Reaktor zu. Besonders bevorzugt wird als Lösungsmittel für die Verbindungen des Strukturtyps (III) Caprolactam verwendet.

In einer bevorzugten Ausführung des erfindungsgemäßen Verfahrens wird als Monomer Caprolactam verwendet, welches nach Polymerisation Polyamid 6 bildet.

In einer weiteren bevorzugten Ausführungsform des erfindungsgemäßen Verfahrens wird dem Ausgangsmonomer insgesamt 0,02 - 1,5 mol % einer oder mehrerer Verbindungen des Strukturtyps (III), besonders bevorzugt 0,03 - 0,4 mol % DDP zugefügt. Es wurde festgestellt, dass Zusätze von DDP bereits in sehr kleinen Konzentrationen die Licht- und Wärmestabilität des erhaltenen Polyamids deutlich verbessern. Die Mengenangaben beziehen sich dabei auf das besonders bevorzugte Ausgangsmonomer Caprolactam.

Man setzt dem Reaktionsgemisch weiterhin ein oder mehrere Triacetondiamin - Verbindungen des Strukturtyps (I), besonders bevorzugt Triacetondiamin (X = H) zu. Bevorzugt werden Mengen zwischen 0,03 und 0,8 mol %, insbesondere zwischen 0,06 und 0,4 mol % bezüglich des besonders bevorzugten Ausgangsmonomeren Caprolactam zugesetzt. Der Zusatz in den Reaktor kann sowohl separat oder als Gemisch mit Ausgangsmonomeren und den Verbindungen des Strukturtyps (III) erfolgen. Erfindungsgemäß wird die separate Zufuhr nach einem Menge/Zeit - Programm bevorzugt.

In einer weiteren bevorzugten Ausführungsform des erfindungsgemäßen Verfahrens wird dem Polymerisationsgemisch mindestens einer der üblicherweise verwendeten Kettenregler zugesetzt. Geeignete Kettenregler sind z. B. Monocarbonsäuren wie Essigsäure, Propionsäure oder Benzoesäure sowie Amine wie beispielsweise Benzylamin. Die Auswahl der Kettenreglerkombinationen und der verwendeten Mengen richtet sich dabei nach den an die Produkteigenschaften gestellten Anforderungen bezüglich Amino- und Carboxylendgruppenzahl und der gewünschten Schmelzeviskosität des Polyamids. Die Anzahl der Aminoendgruppen ist dabei entscheidend für die Anfärbbarkeit des Polyamids, die Viskosität wird nach den Erfordernissen bei der Verarbeitung, beispielsweise bei Verspinnen zur Herstellung von Fasern und Fäden, eingestellt.

Vorzugsweise enthält das nach dem erfindungsgemäßen Verfahren hergestellte Polymerisationsgemisch neben den genannten Zusätzen wie Verbindungen des Strukturtyps (III) und des Strukturtyps (I) sowie einem oder mehreren Kettenreglern noch Dicarbonsäuren oder Diamine bzw. auch Gemische oder vorformierte Salze aus Dicarbonsäuren und Diaminen wie beispielsweise AH - Salz. Durch den Zusatz von Dicarbonsäuren oder Diaminen bzw. deren Gemischen oder Salzen kann insbesondere bei der Polymerisation von Caprolactam zu Polyamid 6 eine Verbesserung der Festigkeit der daraus hergestellten Fasern und Fäden erreicht werden. Außerdem kann die Verarbeitbarkeit, insbesondere die Spinnperformance, entscheidend verbessert werden. Neben der Verbesserung der Produkteigenschaften wirken Zusätze von Dicarbonsäuren und/oder Diaminen als Initiatoren zur Beschleunigung der Polymerisationsgeschwindigkeit, was zu einer Verkürzung der Verweilzeit im Reaktor und damit zur Verminderung von Nebenreaktionen und der daraus resultierenden Produktschädigungen beim Herstellungsprozess führt.

Die erfindungsgemäß zugesetzten Dicarbonsäuren werden vorzugsweise ausgewählt aus: C₄ - C₁₀ Alkandicarbonsäuren wie Adipinsäure, Sebazinsäure, Azelainsäure oder Dodecadicarbonsäure oder aus C₅ - C₈ Cycloalkandicarbonsäuren sowie Benzol- und Napthalindicarbonsäuren, insbesondere Cyclohexan-1,4-dicarbonsäure, Terephthalsäure und Isophthalsäure. Bevorzugt werden sie in Mengen von 0,06 bis 0,6 mol %, besonders bevorzugt 0,1 - 0,5 mol %, bezogen auf das besonders bevorzugte Ausgangsmonomer Caprolactam, eingesetzt.

Die erfindungsgemäß zugesetzten Diamine werden bevorzugt aus aliphatischen C₂ - C₈ Alkandiaminen oder cycloaliphatischen Diaminen ausgewählt. Besonders bevorzugte Vertreter sind hierbei Hexamethylendiamin und Isophorondiamin. Vorzugsweise werden sie in Mengen zwischen 0,05 und 0,6 mol %, insbesondere 0,1 und 0,5 mol %, bezogen auf die Menge Caprolactam, eingesetzt.

In einer anderen bevorzugten Ausführung des erfindungsgemäßen Verfahrens wird die Polymerisation bzw. Polykondensation in Gegenwart von mindestens einem Pigment durchgeführt. Bevorzugte Pigmente sind Titandioxid oder farbgebende organische oder anorganische Pigmente. Die Pigmente werden in Mengen zwischen 0 - 5 Gew. %, bevorzugt in einer Menge zwischen 0,02 und 3 Gew. % in den Reaktor gegeben. Sie können dem Reaktor gemeinsam mit den anderen Ausgangssubstanzen oder getrennt von ihnen zugeführt werden.

Die Erfindung wird durch folgende Beispiele erläutert.

### Vergleichsbeispiel 1

In einem mit Stickstoff inertisierten 30-I-Autoklaven wird eine Mischung aus 16 kg geschmolzenem Caprolactam, 112 g Wasser (0,7 Gew. %), 38,2 g (0,173 mol %) Triacetondiamin und 75,3 g (0,321 mol %) Terephthalsäure unter Rühren innerhalb von 90 min auf 265°C erhitzt. Der sich infolge von Wasserdampfbildung aufgebaute Druck wird im Anschluss innerhalb von zwei Stunden entspannt und die Polymerisationsmischung danach noch weitere 5 h bei 265°C und atmosphärischem Druck gerührt. Die heiße Polymerschmelze wird dann mit Hilfe von erhöhtem Stickstoffdruck über ein Bodenventil aus dem Reaktor in ein Wasserbad abgesponnen. Das erhaltene Polyamid wird granuliert, mit heißem Wasser bei 95°C extrahiert und abschließend bei 140°C im Stickstoffstrom getrocknet. Vom erhaltenen Polyamid wurden folgende Kennwerte ermittelt: rel. LV: 2,44; AEG: 43,2 mequ/kg; CEG: 71,0 mequ/kg

### Beispiel 1

Durchführung von Polymerisation, Extraktion und Trocknung wie in Vergleichsbeispiel 1 beschrieben unter Verwendung folgender Rezeptur: 16 kg Caprolactam, 112 g Wasser (0,7 Gew. %), 33,7 g (0,152 mol %) Triacetondiamin, 38,5 g (0,164 mol %) Terephthalsäure und 74,8 g (0,152 mol %) DDP.

Vom erhaltenen Polyamid wurden folgende Kennwerte ermittelt: rel. LV 2,42; AEG: 41,7 mequ/kg, CEG: 70,5 mequ/kg

### Beispiel 2

Durchführung von Polymerisation, Extraktion und Trocknung wie in Vergleichsbeispiel 1 beschrieben unter Verwendung folgender Rezeptur: 16 kg Caprolactam, 112 g Wasser (0,7 Gew. %), 33,7 g (0,152 mol %) Triacetondiamin, 63,7 g (0,271 mol %) Terephthalsäure und 22,2 g (0,045 mol %) DDP.

Vom erhaltenen Polyamid wurden folgende Kennwerte ermittelt: rel. LV 2,44; AEG 44,5 mequ/kg; CEG 72,7 mequ/kg

### Beispiel 3

Durchführung von Polymerisation, Extraktion und Trocknung wie in Vergleichsbeispiel 1 beschrieben unter Verwendung folgender Rezeptur: 15kg Caprolactam, 186 g (1,24 Gew. %) Wasser, 35,8 g (0,173 mol %) Triacetondiamin, 38,5 g (0,175 mol %) Terephthalsäure, 25,7 g (0,117 mol %) Isophthalsäure, 20,8 g (0,045 mol %) DDP und 40,5 g Titandioxid.

Vom erhaltenen Polyamid wurden folgende Kennwerte ermittelt: rel. LV 2,45; AEG 44,2 mequ/kg; CEG 70,8 mequ/kg

Die Ergebnisse der Beispiele 1 bis 3 zeigen die Unabhängigkeit der erhaltenen Kennwerte von der eingesetzten Konzentration der Stabilisatorkomponente DDP. Obwohl in Beispiel 1 etwa die 3,4 fache Menge der Stabilisatorkomponente DDP im Vergleich zu den Beispielen 2 und 3 verwendet wurde, sind die erhaltenen Kennwerte wie rel. LV, AEG und CEG im Rahmen der Messfehlerabweichung nahezu gleich. Das begründet den entscheidenden Vorteil, dass die zu verwendende Stabilisatormenge beliebig an den erforderlichen Grad der Stabilisierung angepasst werden kann, ohne dass dadurch eine Veränderung der für Anwendung und Verarbeitung entscheidenden Kenngrößen stattfindet. Die folgenden Beispiele bewegende sehr deutliche Verbesserung der Licht- und Wärmestabilität des Polyamids durch die Verwendung einer Kombination aus Triacetondiamin und DDP als Stabilisatoren in den Beispielen 1 und 2 im Vergleich mit Vergleichsbeispiel 1, in dem als Stabilisatorkomponente nur Triacetondiamin verwendet wurde.

### Beispiel 4

Die in Vergleichsbeispiel 1, Beispiel 1 und Beispiel 2 erhaltenen Polyamid - Granulate wurden unter Nutzung eines Schmelzspinntesters der Fa. Fourne unter einheitlichen, im Folgenden angegebenen Bedingungen versponnen: Schmelzetemperatur 275°C, Durchsatz 22,4 g/min, Abzugsgeschwindigkeit 1000 m/min, Spinndüse 12 Bohrungen 300 µm, UD = 2, Filter 40 - 45 µm. Der Vergleich der Materialkenngrößen vor und nach dem Verspinnen dient als Maß für die thermooxidative Stabilisierung des Polyamids. Die Ergebnisse sind in Tabelle 1 zusammengefasst.

**Tabelle 1: Materialkenngrößen der Polyamide vor und nach dem Verspinnen unter den angegebenen Bedingungen**

| Parameter | Vergleichbeispiel 1 | | Beispiel 1 | | Beispiel 2 | |
|---|---|---|---|---|---|---|
| | Granulat | Garn | Granulat | Garn | Granulat | Garn |
| Rel. LV | 2,44 | 2,38 | 2,42 | 2,41 | 2,44 | 2,42 |
| AEG [mequ/kg] | 43,2 | 38,7 | 41,7 | 42,2 | 44,5 | 43,4 |
| CEG [mequ/kg] | 71,0 | 72,2 | 70,5 | 70,0 | 72,2 | 72,0 |

Die Beispiele in Tabelle 1 belegen das verbesserte thermooxidative Verhalten der erfindungsgemäß hergestellten Polyamide in Beispiel 1 und 2 im Vergleich mit dem Material aus Vergleichsbeispiel 1, bei welchem allein Triacetondiamin als Stabilisator eingesetzt wurde. Durch den deutlich verringerten thermooxidativen Abbau der Polymere im Spinnextruder können die Verarbeitungseigenschaften im Spinnprozess entscheidend verbessert werden. Außerdem bieten die erfindungsgemäßen Polyamide auf Grund der besseren Konstanz der Zahl der Aminoendgruppen während des Spinnprozesses ein verbessertes Anfärbeverhalten im Vergleich mit dem Stand der Technik.

### Beispiel 5

Die Polyamide aus Vergleichbeispiel 1 sowie aus Beispiel 1 und 2 wurden wie in Beispiel 3 beschrieben versponnen und nach 48 Stunden Konditionierung auf einer Reckeinrichtung der Fa. Vickers - Zimmer mit unterschiedlichen Reckverhältnissen gereckt, so dass jeweils Garne mit Elementarfadenfeinheiten von 7 und 10 dtex erhalten wurden. Zur Ermittlung der Lichtstabilität wurden die Garne 50 und 200 h in einem Xenotester bestrahlt, wobei sowohl vor als auch nach der Bestrahlung die Festigkeiten der Garne ermittelt wurden. Die erhaltenen Ergebnisse sind in den Tabellen 2 und 3 zusammengefasst.

**Tabelle 2: Ermittlung der Restfestigkeit der Garne nach 50 h Xenotest**

| Material | Vergleichsbeispiel 1 | | Beispiel 1 | | Beispiel 2 | |
|---|---|---|---|---|---|---|
| Titer Elementarfaden[dtex] | 7 | 10 | 7 | 10 | 7 | 10 |
| Restfestigkeit [%] | 79,9 | 84,6 | 87,3 | 88,1 | 84,1 | 84,8 |

**Tabelle 3: Ermittlung der Restfestigkeit der Garne nach 200 h Xenotest**

| Material | Vergleichsbeispiel 1 | | Beispiel 1 | | Beispiel 2 | |
|---|---|---|---|---|---|---|
| Titer Elementarfaden[dtex] | 7 | 10 | 7 | 10 | 7 | 10 |
| Restfestigkeit [%] | 61,6 | 68,9 | 85,8 | 83,4 | 83,5 | 76,9 |

Die Beispiele in den Tabellen 2 und 3 belegen anhand der deutlich erhöhten Restfestigkeit der im Xenotest bestrahlten Garne eindeutig die verbesserte Lichtstabilität der erfindungsgemäßen Polyamide im Vergleich mit dem Stand der Technik. Insbesondere mit dem Material aus Beispiel 2 wird ersichtlich, dass die erfindungsgemäße Kombination aus DDP und Triacetondiamin bereits bei der Verwendung sehr kleiner Mengen DDP einen deutlich verbesserten Schutz gegen die Schädigung durch Licht bietet als mit Stabilisatoren vom Stand der Technik

Die erfindungsgemäß hergestellten Polyamide sind wie vorstehend nachgewiesen geeignet zur Herstellung von Fäden, Fasern oder Folien. Sie können eingesetzt werden in Verfahren zur Herstellung von Fäden und Fasern auf Basis von Polyamid 6 durch Schmelzspinnen. Darüber hinaus umfasst die Erfindung die Verwendung aus erfindungsgemäß erhaltenem Polyamid hergestellter Fäden zur Herstellung von Fasern und textilen Flächengebilden sowie die durch diese Verwendung erhältliche Fasern und textilen Flächengebilde.

## Patentansprüche

1. Verfahren zur Herstellung von licht- und wärmestabilisierten Polyamiden durch Polymerisation bzw. Polykondensation von Monomeren,
**dadurch gekennzeichnet, dass**
der Reaktionsmischung ein Gemisch aus einer oder mehreren Verbindungen der allgemeinen Formel III 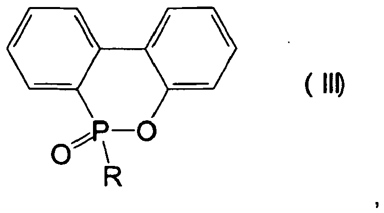 in der R die folgende Bedeutung hat:
R =
• -COOH, -COOR¹, -NHR¹ , -NCO, Anhydrid,
• C₃ bis C₉ cycloaliphatisch, stellungsbeliebig substituiert mit R² und/oder R³,
• Benzyl, Phenyl, Naphthenyl, stellungsbeliebig substituiert mit R² und/oder R³,
• aliphatisch, R²- [CH₂]ₙ - CH - [CH₂]ₘ - R³, mit n und m von 0 bis 20, wobei R² und R³ an jedem beliebigen Kohlenstoffatom des aliphatischen Kohlenwasserstoffs gebunden sein kann und nicht auf terminale Stellung beschränkt ist,
R¹ = C₁ bis C₂₀ aliphatisch, C₄ bis C₉ cycloaliphatisch, Benzyl, Phenyl, R² = -COOH, -COOR¹, -NHR¹, -NCO, Anhydrid,
R³ = R²,
ausgenommen Butandicarbonsäurereste,
und einer oder mehreren Verbindungen der allgemeinen Formel I 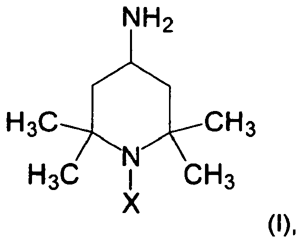 wobei X für H, C₁ bis C₂₀ aliphatisch, Benzyl steht,
zugesetzt wird.

2. Verfahren nach Anspruch 1,
**dadurch gekennzeichnet, dass**
der Reaktionslösung eine Mischung von Verbindungen der allgemeinen Formel III in einem kontinuierlich ablaufenden ein- oder zweistufigen Prozess in einem kontinuierlichen Reaktor unter Ausschluss von Luftsauerstoff bei einer Temperatur von 240 °C bis 300 °C zugesetzt wird.

3. Verfahren zur Herstellung von licht- und wärmestabilisierten Polyamiden nach Anspruch 1,
**dadurch gekennzeichnet, dass**
eine Mischung von Verbindungen der allgemeinen Formeln I und III im Batch-Verfahren zugesetzt werden.

4. Verwendung von Verbindungen der allgemeinen Formel III 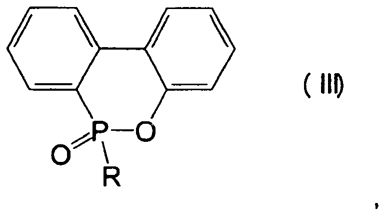 in der R die folgende Bedeutung hat:
R =
• -COOH, -COOR¹, -NHR¹, -NCO, Anhydrid,
• C₃ bis C₉ cycloaliphatisch, stellungsbeliebig substituiert mit R² und/oder R³,
• Benzyl, Phenyl, Naphthenyl, stellungsbeliebig substituiert mit R² und/oder R³,
• aliphatisch, R²- [CH₂]ₙ- CH - [CH₂]ₘ - R³, mit n und m von 0 bis 20, wobei R² und R³ an jedem beliebigen Kohlenstoffatom des aliphatischen Kohlenwasserstoffs gebunden sein kann und nicht auf terminale Stellung beschränkt ist,
R¹ = C₁ bis C₂₀ aliphatisch, C₄ bis C₉ cycloaliphatisch, Benzyl, Phenyl, R² = -COOH, -COOR¹, -NHR¹, -NCO, Anhydrid,
R³ = R²,
ausgenommen Butandicarbonsäurereste,
in beliebiger Mischung als Licht- und Wärmestabilisatoren für Polyamide.

5. Verwendung von Verbindungen der allgemeinen Formel III 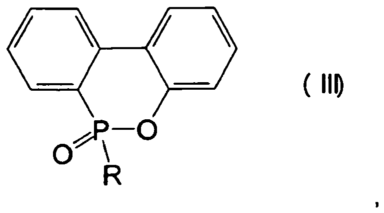 R = • -COOH, -COOR¹, -NHR¹, -NCO, Anhydrid,
• C₃ bis C₉ cycloaliphatisch, stellungsbeliebig substituiert mit R² und/oder R³,
• Benzyl, Phenyl, Naphthenyl, stellungsbeliebig substituiert mit R² und/oder R³,
• aliphatisch, R² - [CH₂]ₙ- CH - [CH₂]ₘ- R³, mit n und m von 0 bis 20, wobei R² und R³ an jedem beliebigen Kohlenstoffatom des aliphatischen Kohlenwasserstoffs gebunden sein kann und nicht auf terminale Stellung beschränkt ist,
R¹ = C₁ bis C₂₀ aliphatisch, C₄ bis C₉ cycloaliphatisch, Benzyl, Phenyl, R² = -COOH, -COOR¹, -NHR¹, -NCO, Anhydrid,
R³ = R²,
ausgenommen Butandicarbonsäurereste,
in Kombination mit Verbindungen der allgemeinen Formel I 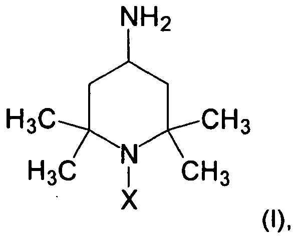 wobei X für H, C₁ bis C₂₀ (aliphatisch), Benzyl steht,
in Verfahren zur Herstellung licht- und wärmestabilisierter Polyamide.

6. Licht- und wärmestabilisierte Polyamide,
**dadurch gekennzeichnet, dass**
im Herstellungsprozess als Stabilisatoren Verbindungen der allgemeinen Formel III 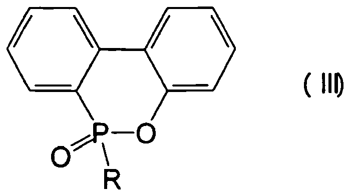 in der R die folgende Bedeutung hat:
R = • -COOH, -COOR¹, -NHR¹ , -NCO, Anhydrid,
• C₃ bis C₉ cycloaliphatisch, stellungsbeliebig substituiert mit R² und/oder R³,
• Benzyl, Phenyl, Naphthenyl, stellungsbeliebig substituiert mit R² und/oder R³,
• aliphatisch, R²- [CH₂]ₙ - CH - [CH₂]ₘ- R³, mit n und m von 0 bis 20, wobei R² und R³ an jedem beliebigen Kohlenstoffatom des aliphatischen Kohlenwasserstoffs gebunden sein kann und nicht auf terminale Stellung beschränkt ist,
R¹ = C₁ bis C₂₀ aliphatisch, C₄ bis C₉ cycloaliphatisch, Benzyl, Phenyl, R² = -COOH, -COOR¹, -NHR¹, -NCO, Anhydrid,
R³ = R²,
ausgenommen Butandicarbonsäurereste,
in Kombination mit Verbindungen der allgemeinen Formel I 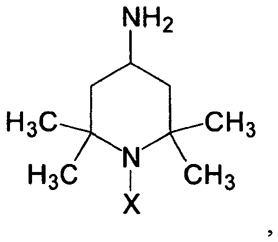 wobei X für H, C₁ bis C₂₀ (aliphatisch), Benzyl steht,
zugesetzt werden und
Monocarbonsäuren und Amine ebenso wie Dicarbonsäuren und Diamine in geringer Menge zugesetzt werden.

7. Licht- und wärmestabilisierte Polyamide nach Anspruch 6,
**dadurch gekennzeichnet, dass**
im Herstellungsprozess Pigmente zugesetzt werden.

8. Verwendung von licht- und wärmestabilisierten Polyamiden nach Anspruch 6 oder 7 als Ausgangsstoffe zur Herstellung von Fasern, Fäden, Folien durch Schmelzspinnen und deren Weiterverarbeitung zu textilen Flächengebilden.

## Claims

1. Process for the production of polyamides stabilized with respect to light and to heat via polymerization or, respectively, polycondensation of monomers,
**characterized in that**
a mixture of one or more compounds of the general formula III 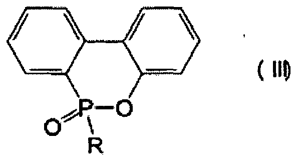 in which R is defined as follows:
R = • -COOH, -COOR¹, -NHR¹, -NCO, anhydride,
• C₃ to C₉ cycloaliphatic, with substitution at any desired position by R² and/or R³,
• benzyl, phenyl, naphthenyl, substituted at any desired position by R² and/or R³,
• aliphatic, R²-[CH₂]ₙ-CH-[CH₂]ₘ-R³, where n and m are from 0 to 20, where
R² and R³ can have bonding to any desired carbon atom of the aliphatic hydrocarbon, with no restriction to terminal position,
R¹ = C₁ to C₂₀ aliphatic, C₄ to C₉ cycloaliphatic, benzyl, phenyl,
R² = -COOH, -COOR¹, -NHR¹, -NCO, anhydride,
R³ = R²,
with the exception of butanedicarboxylic acid moieties,
and of one or more compounds of the general formula I 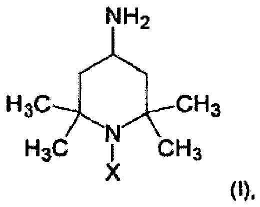 where X is H, C₁ to C₂₀ aliphatic or benzyl,
is added to the reaction mixture.

2. Process according to Claim 1,
**characterized in that**
a mixture of compounds of the general formula III is added in a continuous single- or two-stage process in a continuous reactor with exclusion of atmospheric oxygen at a temperature of from 240°C to 300°C to the reaction solution.

3. Process for the production of polyamides stabilized with respect to light and to heat according to Claim 1,
**characterized in that**
a mixture of compounds of the general formulae I and III is added in the batch process.

4. Use of compounds of the general formula III 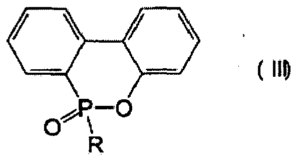 in which R is defined as follows:
R =
• -COOH, -COOR¹, -NHR¹, -NCO, anhydride,
• C₃ to C₉ cycloaliphatic, with substitution at any desired position by R² and/or R³,
• benzyl, phenyl, naphthenyl, substituted at any desired position by R² and/or R³,
• aliphatic, R²-[CH₂]ₙ-CH-[CH₂]ₘ-R³, where n and m are from 0 to 20, where
R² and R³ can have bonding to any desired carbon atom of the aliphatic hydrocarbon, with no restriction to terminal position,
R¹ = C₁ to C₂₀ aliphatic, C₄ to C₉ cycloaliphatic, benzyl, phenyl,
R² = -COOH, -COOR¹, -NHR¹, -NCO, anhydride,
R³ = R²,
with the exception of butanedicarboxylic acid moieties,
in any desired mixture as stabilizers for polyamides with respect to light and to heat.

5. Use of compounds of the general formula III 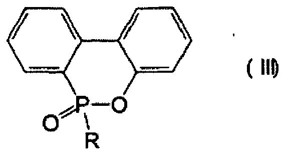 in which R is defined as follows:
R =
• -COOH, -COOR¹, -NHR¹, -NCO, anhydride,
• C₃ to C₉ cycloaliphatic, with substitution at any desired position by R² and/or R³,
• benzyl, phenyl, naphthenyl, substituted at any desired position by R² and/or R³,
• aliphatic, R²- [CH₂]ₙ-CH-[CH₂]ₘ-R³, where n and m are from 0 to 20, where
R² and R³ can have bonding to any desired carbon atom of the aliphatic hydrocarbon, with no restriction to terminal position,
R¹ = C₁ to C₂₀ aliphatic, C₄ to C₉ cycloaliphatic, benzyl, phenyl,
R² = -COOH, -COOR¹, -NHR¹, -NCO, anhydride,
R³ = R²,
with the exception of butanedicarboxylic acid moieties,
in combination with compounds of the general formula I 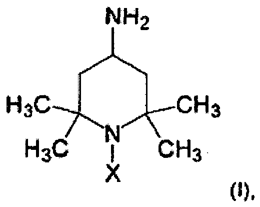 where X is H, C₁ to C₂₀ (aliphatic) or benzyl,
in processes for producing polyamides stabilized with respect to light and to heat.

6. Polyamides stabilized with respect to light and to heat,
**characterized in that**
during the production process compounds of the general formula III are added as stabilizers 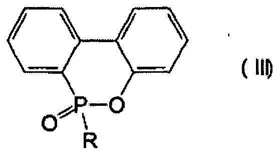 in which R is defined as follows:
R =
• -COOH, -COOR¹, -NHR¹, -NCO, anhydride,
• C₃ to C₉ cycloaliphatic, with substitution at any desired position by R² and/or R³,
• benzyl, phenyl, naphthenyl, substituted at any desired position by R² and/or R³,
• aliphatic, R²-[CH₂]ₙ-CH-[CH₂]ₘ-R³, where n and m are from 0 to 20, where
R² and R³ can have bonding to any desired carbon atom of the aliphatic hydrocarbon, with no restriction to terminal position,
R¹ = C₁ to C₂₀ aliphatic, C₄ to C₉ cycloaliphatic, benzyl, phenyl,
R² = -COOH, -COOR¹, -NHR¹, -NCO, anhydride,
R³ = R²,
with the exception of butanedicarboxylic acid moieties,
in combination with compounds of the general formula I 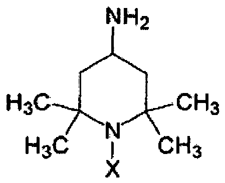 where X is H, C₁ to C₂₀ (aliphatic) or benzyl,
and small amounts of monocarboxylic acids and of amines, and also of dicarboxylic acids and of diamines, are added.

7. Polyamides according to Claim 6 stabilized with respect to light and to heat,
**characterized in that**
pigments are added in the production process.

8. Use of polyamides according to Claim 6 or 7 stabilized with respect to light and to heat as starting materials for the production of fibres, filaments, or foils via melt spinning and further processing of these to give sheets of textile.

## Revendications

1. Procédé pour la préparation de polyamides stabilisés à la lumière et à la chaleur par polymérisation ou, selon le cas, polycondensation de monomères, **caractérisé en ce que** le mélange réactionnel est additionné d'un mélange d'un ou de plusieurs composés de formule générale III 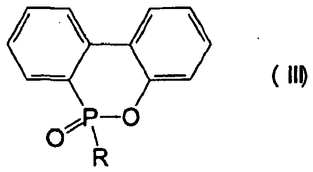 dans laquelle R a la signification suivante :
R =
- -COOH, -COOR¹, -NHR¹, -NCO, anhydride,
- radical cycloaliphatique en C₃ à C₉, substitué en une position quelconque par R² et/ou R³,
- benzyle, phényle, naphtényle, substitué en une position quelconque par R² et/ou R³,
- radical aliphatique, R²- [CH₂]ₙ-CH-[CH₂]ₘ-R³, n et m valant 0 à 20, où
R² et R³ peuvent être liés à n'importe quel atome de carbone de l'hydrocarbure aliphatique et ne sont pas limités à la position terminale,
R¹ = radical aliphatique en C₁ à C₂₀, cycloaliphatique en C₄ à C₉, benzyle, phényle,
R² = -COOH, -COOR¹, -NHR¹, -NCO, anhydride, R³ = R²,
à l'exception de radicaux d'acide butanedicarboxylique,
et d'un ou de plusieurs composés de formule générale I 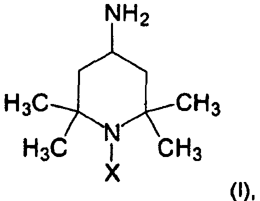 où X représente H, radical aliphatique en C₁ à C₂₀, benzyle.

2. Procédé selon la revendication 1, **caractérisé en ce que** la solution réactionnelle est additionnée d'un mélange de composés de formule générale III dans un procédé à un ou deux étages se déroulant en continu, dans un réacteur continu, à l'abri de l'oxygène de l'air, à une température de 240°C à 300°C.

3. Procédé pour la préparation de polyamides stabilisés à la lumière et à la chaleur selon la revendication 1, **caractérisé en ce qu'**un mélange de composés des formules générales I et III est ajouté dans un procédé par lots.

4. Utilisation de composés de formule générale III 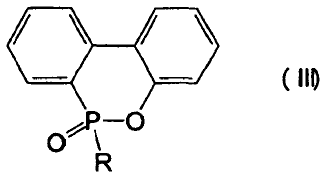 dans laquelle R a la signification suivante :
R =
- -COOH, -COOR¹, -NHR¹, -NCO, anhydride,
- radical cycloaliphatique en C₃ à C₉, substitué en une position quelconque par R² et/ou R³,
- benzyle, phényle, naphtényle, substitué en une position quelconque par R² et/ou R³,
- radical aliphatique, R²- [CH₂]ₙ-CH-[CH₂]ₘ-R³, n et m valant 0 à 20, où
R² et R³ peuvent être liés à n'importe quel atome de carbone de l'hydrocarbure aliphatique et ne sont pas limités à la position terminale, R¹ = radical aliphatique en C₁ à C₂₀, cycloaliphatique en C₄ à C₉, benzyle, phényle,
R² = -COOH, -COOR¹, -NHR¹, -NCO, anhydride,
R³ = R²,
à l'exception de radicaux d'acide butanedicarboxylique,
en mélange quelconque comme stabilisants à la lumière et à la chaleur pour des polyamides.

5. Utilisation de composés de formule générale III 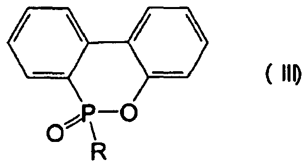 dans laquelle R a la signification suivante :
R =
- -COOH, -COOR¹, -NHR¹, -NCO, anhydride,
- radical cycloaliphatique en C₃ à C₉, substitué en une position quelconque par R² et/ou R³,
- benzyle, phényle, naphtényle, substitué en une position quelconque par R² et/ou R³,
- radical aliphatique, R²-[CH₂]ₙ-CH-[CH₂]ₘ-R³, n et m valant 0 à 20, où
R² et R³ peuvent être liés à n'importe quel atome de carbone de l'hydrocarbure aliphatique et ne sont pas limités à la position terminale,
R¹ = radical aliphatique en C₁ à C₂₀, cycloaliphatique en C₄ à C₉, benzyle, phényle,
R² = -COOH, -COOR¹, -NHR¹, -NCO, anhydride,
R³ = R²,
à l'exception de radicaux d'acide butanedicarboxylique,
en combinaison avec des composés de formule générale I 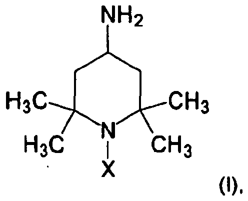 où X représente H, radical (aliphatique) en C₁ à C₂₀, benzyle,
dans des procédés pour la préparation de polyamides stabilisés à la lumière et à la chaleur.

6. Polyamides stabilisés à la lumière et à la chaleur, **caractérisés en ce qu'**on ajoute dans le procédé de préparation, comme stabilisants, des composés de formule générale III 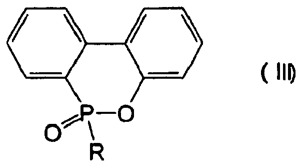 dans laquelle R a la signification suivante :
R =
- -COOH, -COOR¹, -NHR¹, -NCO, anhydride,
- radical cycloaliphatique en C₃ à C₉, substitué en une position quelconque par R² et/ou R³,
- benzyle, phényle, naphtényle, substitué en une position quelconque par R² et/ou R³,
- radical aliphatique, R²-[CH₂]ₙ-CH-[CH₂]ₘ-R³, n et m valant 0 à 20, où
R² et R³ peuvent être liés à n'importe quel atome de carbone de l'hydrocarbure aliphatique et ne sont pas limités à la position terminale,
R¹ = radical aliphatique en C₁ à C₂₀, cycloaliphatique en C₄ à C₉, benzyle, phényle,
R² = -COOH, -COOR¹, -NHR¹, -NCO, anhydride,
R³ = R²,
à l'exception de radicaux d'acide butanedicarboxylique,
en combinaison avec des composés de formule générale I 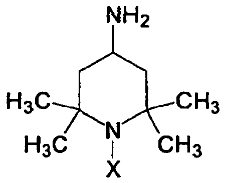 où X représente H, radical (aliphatique) en C₁ à C₂₀, benzyle,
et, en faible quantité, des acides monocarboxyliques et des amines ainsi que des acides dicarboxyliques et des diamines.

7. Polyamides stabilisés à la lumière et à la chaleur selon la revendication 6, **caractérisés en ce que** des pigments sont ajoutés au procédé de préparation.

8. Utilisation de polyamides stabilisés à la lumière et à la chaleur selon la revendication 6 ou 7 comme substances de départ pour la préparation de fibres, de fils, de feuilles par filage en masse fondue et leur transformation ultérieure en structures textiles planes.
